# EUROPEAN PATENT SPECIFICATION

(11) **EP 3 723 346 B1**
(45) Date of publication and mention of the grant of the patent: **21.08.2024**
(21) Application number: 19168430.7
(22) Date of filing: 10.04.2019
(51) Int. Cl.: H04L 67/12

(54) **SELECTIVE ADDRESS SPACE AGGREGATION**
SELEKTIVE ADRESSRAUMAGGREGATION
AGRÉGATION D'ESPACE D'ADRESSE SÉLECTIVE

(43) Date of publication of application: 14.10.2020
(73) Proprietor: ABB Schweiz AG, 5400 Baden (CH)
(72) Inventor: Braun, Roland, 53859 Niederkassel Lülsdorf (DE); Krossoy, Frode, 5417 Stord (NO); Bauer, Philipp, 69469 Weinheim (DE)
(74) Representative: Maiwald GmbH

(56) References cited:
- IAN L. TUOMI: "Aggregating OPC UA Server for FlexibleManufacturing Systems", 7 July 2015 (2015-07-07), XP002794441, Retrieved from the Internet <URL:https://core.ac.uk/download/pdf/80716585.pdf> [retrieved on 20190920]

## Description

### Field of the invention

The present invention relates to an aggregating server in an Open Platform Communications Unified Architecture (OPC UA) that aggregates a reduced set of nodes of a remote address space, a node description information generator, a system comprising an aggregation server, a node description information generator and a method for filtering aggregation node images.

### Background

OPC UA is a standard specification defining communication of on-line data from various devices from different manufacturers. Future Distributed Control Systems (DCS) will run on OPC UA-connected devices. OPC UA is a platform-independent, service oriented client-server architecture, which transports machine data as control values, measurement values and parameters, and describes the machine data semantically.

UA servers receive and expose information, such as sensor data, from a device. A UA server supports information models, which define, how the information is typed and classified. The representation of this information is called the servers address space. UA clients are applications that connect to UA servers. Clients are used, for example, to find information from the server's address space, to read and write server data, to subscribe to certain changes such as data changes, or events such as alarms, and to call server methods. The communication between clients and servers is handled by services. The address space is the actual representation of the information that a UA server exposes. It is formed by nodes and references, which can be explored and displayed by a UA client. A node may be compared to an object in object-oriented programming languages. A node comprises attributes, methods, and events. Attributes can have values, which can be read, methods are called by a command, and events can be sent to exchange certain information between devices. Events are alarms and conditions, occurring e.g. at a data changes. An event comprises a reception time stamp, a message and a degree of severity. References are used to relate nodes to each other and attributes are used to describe a node. The information model is based on the nodes.

An OPC-UA system may be organized according to an aggregation architecture. An aggregation architecture comprises aggregated servers and aggregation servers, also referred to as aggregating servers in this disclosure.

Aggregated servers represent the entities of the automation system. These are the underlying servers which may either represent a single component (e.g., a field device) or a subsystem that consists of a set of components, parts of the automation system or the entire automation system. The nodes that are created and managed by the aggregated servers form the remote address space. The counterpart to the remote address space is the aggregated address space, which is formed by the nodes in the aggregating server.

The aggregation server is the core of the aggregation architecture. It connects to underlying servers via OPC UA services and aggregates their type, instance and structure information.

Thus, a single server can be used to connect to multiple other servers and to represent their information in a unified manner. This way, a client connecting to the server can access the data of multiple servers from a single source.

The aggregated nodes in the aggregation server are images of the remote nodes of the aggregated servers. In this disclosure, these nodes are also referred to as "proxy nodes".

The aggregation node manager is the central singleton that manages the nodes in the address space of the aggregation server. The OPC UA client provides functionality to connect to aggregated servers and to access nodes in the address space of the aggregated server. The aggregation node manager creates one OPC UA client per underlying server and then browses each underlying server with the help of the respective clients. The node manager forwards all requests (read, write, subscribe etc.) to and from the underlying node in the aggregated server via the respective OPC UA client connected to that particular server.

An OPC UA system may accommodate hundreds or even thousands of nodes. Especially when starting up the system, it may take several minutes to aggregate all nodes in an aggregation server. Often, only a part of the data comprised in the nodes is interesting for an operator, so that it may happen that the client has to cope with a high amount of data, which it has to sort or to handle before creating its view, or irrelevant data is presented by the view of the client. Moreover, the more data is available at the client, the more information about the system might be provided to a potential adversary, facilitating him to attack the system.

Ian L. Tuomi: "Aggregating OPC UA Server for Flexible Manufacturing Systems" describes a design of an aggregating OPC UA server specifically for use in Flexible Manufacturing Systems.

### Summary

Therefore, there may be a desire to accelerate the start-up of the system and to enhance the security of the system.

The problem is solved by the subject-matter of the independent claims. Embodiments are provided by the dependent claims, the following description and the accompanying figures.

The described embodiments similarly pertain to the aggregation server, the controller, the method for forwarding node data, the computer program element and the computer-readable medium. Synergetic effects may arise from different combinations of the embodiments although they might not be described in detail.

Further on, it shall be noted that all embodiments of the present invention concerning a method, might be carried out with the order of steps as described, nevertheless this has not to be the only and essential order of steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to an aspect, an aggregating server is provided. The aggregating server comprises a remote node input interface configured to receive node images representing nodes in a remote address space; an address space description interface configured to import node description information of nodes in the remote address space to be aggregated; an aggregation module, configured to instantiate proxy nodes based on the received node data of nodes in the remote address space; and a node filter located between the remote node input interface and the aggregation module, configured to filter the received node images from the remote node input interface according to the imported node description information of nodes in the remote address space to be aggregated.

The remote node input interface may be a client running on the aggregating server connected to a remote node server, which is also referred to as aggregated server or server to be aggregated. The input interface may comprise several such clients, each connecting to a different UA server. The connection may be an industrial Ethernet connection or a connection according to any other protocol to transport and exchange data. The structured node data of a node provided by the remote node server and available at the input interface is referred to as "node image" in this disclosure, so that it can be distinguished from the node objects, or nodes, located on a UA server. A "node image" thus may be regarded here as a copy of the node data of one node, which is transferred from the server to the client on the aggregating server. The node images are received at the input interface and, instead of being aggregated directly by the aggregation module, they are first filtered by a filter, resulting in a selective address space aggregation. "Aggregated nodes" are nodes of aggregated servers, whose structured data is collected by the aggregation server, consolidated and represented based on the information model of the aggregation server. A corresponding node is instantiated and stored as proxy nodes in the aggregating server by the aggregation module, which may be a OPC UA aggregation node manager, so that they can be accessed by the OPC UA server in the aggregating server, and provided to an external client. The filter reduces the number of nodes in the remote address space to a lower number of nodes of interest, which are selected based on filter information that is imported by the aggregating server. The filter information is a node description information for each of the nodes in the remote address space that are to be aggregated.

The filtering has several effects. Due to the reduction of proxy nodes to be instantiated, the time to set-up or start the system, which takes usually up to several minutes, is reduced, processing resources are saved, and power consumption is reduced. Further, unnecessary information is not represented by the external client resulting in a better overview and faster identification of the data and values of interest for the operator. A further important aspect is the improvement of security. By reducing the address space, the access to the servers is limited due to the limitation of the information, which might be used to attack the aggregation server or the aggregated UA servers, or the system. The filter may thus be regarded to provide a firewall functionality.

According to an embodiment, the address space description interface is a file interface. The file to be read may be generated by a tool that has access to the node description of all nodes in the remote address space and which can be configured to select node descriptions of those nodes that are to be aggregated. File formats may be binary, ASCII, xml or similar. Depending on security requirements, the file may further be hashed and/or encrypted. Alternatively, the address space description interface is a digital data connection interface by which an electrical, i.e. wired, or an electromagnetic, i.e., wireless, or optical connection to a provider of the data is possible. The data may be provided using a client-server relation, where, e.g., a client, such as a UDP or TCP client, or a client according to another standard is located on the aggregation server. In another example, the provider and the aggregation server may comprise communication units according to a wireless standard. The provider of the node description information may be an application or a server that reads node description data from a OPC UA server over a file, wireless or wired interface as explained further below.

According to an example, the generated file to be read by the aggregating server is a nodeset file. The nodeset file is one possible technical realization of data exchange in the OPC UA environment in the form of an xml file. In OPC UA the nodeset file describes the address space of a UA server. One or a plurality of nodes can be described in a single nodeset file. If there are several servers, for each of the OPC UA servers to aggregate one nodeset file may exist.

According to an example, the generated file to be read by the aggregating server is a single file that comprises nodeset file data of one or more nodeset files.

Since the aggregation performs a transformation of the aggregated address space, according to an example, the transformation may be performed already when generating the file to be read by the aggregating server, so that the aggregating server can derive its address space directly from the generated file.

According to an embodiment, the node description information of nodes in the remote address space to be aggregated is related to a technical application. For example, for controlling a valve in a plant, measurement data as pressure and temperature, and machine states related to the valve may be needed at an external client, and other measurement data of the plant are of no interest for this example of a technical application. The nodes related to this application may be distributed on several servers. The tool may then be configured to read the node descriptions of all servers, to select those nodes, which are related to this technical application, and to provide the descriptions of these nodes to the aggregation server by writing one or more reduced nodeset files.

According to an aspect, a node description information generator is provided, configured to generate node aggregation description information to be imported by an aggregating server for filtering node images to be aggregated. The node description information generator comprises a generator input interface, configured to receive node description information of nodes in a remote address space; a generator processing module, configured to generate node aggregation description information based on the received node description information and on a node aggregation configuration; and a generator output interface, configured to output the generated node aggregation description information.

In an example, the node description information generator is an engineering tool configured to read node description input information and to generate node description output information, wherein the node description output information is a subset of the node description input information. The subset then is used as input for the filter of the aggregation server and corresponds to the nodes to be aggregated by the aggregation server. The node description information generator may have a further interface by which the generator can be configured. This configuration interface can be a further file interface, or a wired or wireless console interface, Web-interface, or it can be even realized as a client-server architecture. It could also be a combination of the listed interface types. For example, the operator at the external OPC UA client may select a technical application, and a co-located generator client could automatically login to a generator server running on the generator. The nodes associated with the technical application may, for example, be configured at the generator-client, in a file read by the generator, or may be identified through the node description.

The node description input information may be contained in one or several files that are read by the generator, comprising the descriptions of all nodes in the remote address space and which can be configured to select node descriptions of those nodes that are to be aggregated. Preferably, the file or the files are XML-nodeset files, written by the OPC UA servers of the remote address space. The node description output information may, as described above, preferably also be a nodeset file, however, in principle, instead of the input and output nodeset files any other forms, as for example a binary format could be used, or digital data connections as described above.

According to an aspect, a system is provided comprising an aggregation server according to an embodiment as described above, and a node description information generator according to an embodiment as described above. The aggregation server is connected to the node description information generator via an interface, for example a file interface, by which the aggregation server is enabled to receive node description information. The file may be written by the generator and read by the aggregation server at the start-up of the system, in a regular time events, on scheduled events or on unscheduled events. Unscheduled events may occur, when an operator accesses the file or when a data change is detected. Scheduled events may occur, for example, when at a scheduled time a data change is foreseen.

According to an embodiment, the system further comprises a client device. The client device comprises a first client for accessing the aggregation server and for representing, that is, for example, displaying the filtered, i.e. reduced, aggregated nodes. The filtered aggregated nodes are nodes according to the configuration of the node description information generator. For example, the nodes are selected according to a specific technical application.

The client device may be an external OPC UA client device, or - from a functional or from a software perspective - comprise an external OPC UA client. The client device may further comprise a console. A console is a device or part of a device that acts as human-man interface and may be realized as hardware, software, or both. For example, an operator may view node data, e.g., measurement data in the console view, and may insert instructions into the console view. The communication with the aggregating server may be realized through the actual client in the sense of client-server communication, as for example the first client, that connects the client device to the aggregation server. A console may be, in a more strict sense, a software allowing, e.g., a data view and allowing to receive input from an operator. In a simple case, a console is a command window. On a hardware device more than one software consoles or software application windows may be run in parallel, so that a view of a second application is possible, provided that the configuration of the generator was adjusted to provide also the nodeset descriptions of the second technical application.

According to a further embodiment, the client device of the system further comprises a second client for accessing the node description information generator. The second client is the counterpart to a server of the node description information generator. This connection allows a re-configuration of the generator during run-time of the system. For example, the operator wants to change the technical application or to add sensor data of further sensors to the current application, so that other nodes than the nodes of the previous application or additional nodes might be necessary to be viewed. The change of technical application leads to a re-configuration of the generator. The re-configuration again leads to a change of the filter configuration, so that the new nodes can be aggregated. Previously aggregated nodes, i.e. proxy nodes in the aggregation server, that are of no interest any more, may be deleted or hidden.

According to a further aspect, a method for filtering aggregation node images is provided. The method comprises the steps:
S1 receiving, by an aggregation server, node images representing nodes in a remote address space;
S2 importing, by the aggregation server, node description information of nodes in the remote address space to be aggregated;
S3 filtering, by the aggregation server, the received node images according to the node description information; and
S4 aggregating, by the aggregation server, the filtered node images.

Steps S1 and S2 may be performed in the given order, or contemporarily, or in the reverse order.

The aggregation server receives the node images and imports independently the node description information of nodes in the remote address space to be aggregated; i.e., a reduced set of node description information. The aggregation server filters the images such that only those images remain, which are contained in the received node description information. Finally, the aggregation server instantiates the resulting node images as proxy nodes. These proxy nodes reflect the view of a client connected to the aggregation server.

According to an embodiment, the method further comprises the following steps:
S5 receiving, by a node description information generator, node description information of nodes in a remote address space;
S6 generating, by the node description information generator, aggregation description information based on the received node description information and on a node aggregation configuration; and
S7 outputting, by the node description information generator, the generated node aggregation description information and providing the generated node aggregation description information to the aggregation server.

The steps S5 to S7 represent the generation of the input data for step S2. The node description information generator receives as input the complete set of nodes from the OPC UA servers, whose nodes form the remote address space. The data transfer may be performed using a file, e.g., a nodeset file. The generator receives further configuration information, e.g., also via a configuration file or via a client-server connection, and generates a file with a reduced set of description of the nodes. The reduced set of node description corresponds to the nodes that shall be viewed by an OPC UA client outside of the aggregation server. The aggregation server reads the file containing the reduced set of node descriptions and imports the node description information, which is the input for step S3 described above.

According to an aspect, a computer program element is provided, which when being executed by a processor, instructs the aggregating server to perform steps S2 to S5 as described above. The computer program element may be part of a computer program, but it can also be an entire program by itself. For example the computer program element may be used to update an already existing computer program to get to the present invention.

According to an aspect, a computer readable medium is provided, on which a program element according to claim 10 is stored. The computer readable medium may be seen as a storage medium, such as for example, a USB stick, a CD, a DVD, a data storage device, a hard disk, or any other medium on which a program element as described above can be stored.

### Brief description of drawings

The following figures illustrate embodiments of the invention.
Fig. 1 shows a block diagram of an aggregation server and a node description information generator according to an embodiment.
Fig. 2 shows a flow diagram of a method for filtering aggregation node images according to an embodiment.

### Description of embodiments

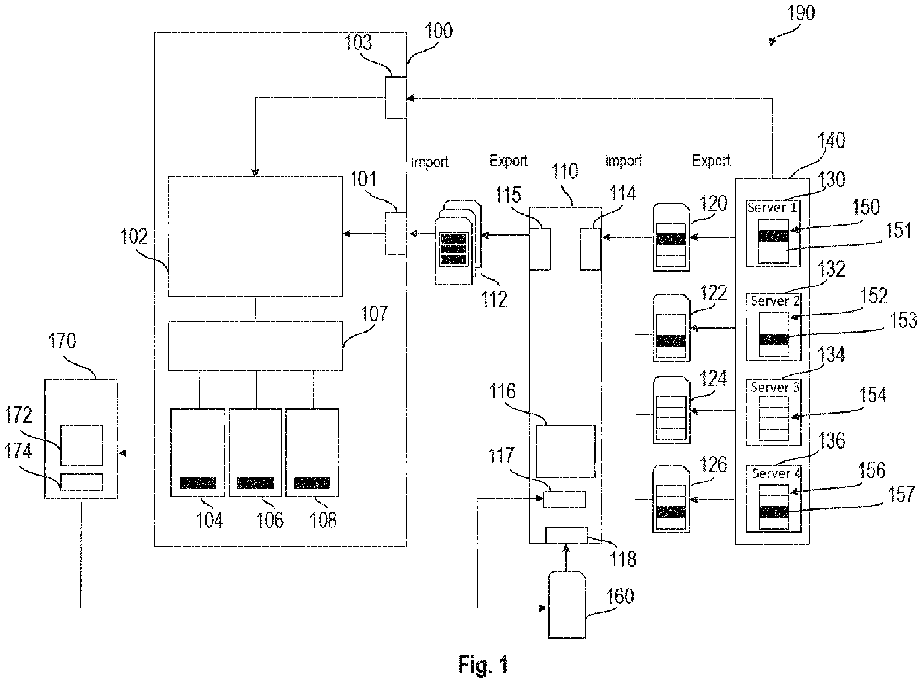

Fig. 1 shows a block diagram of the system 190 comprising mainly an aggregation server 100, a node description information generator 110, a client device 170, and OPC UA servers 130, 132, 134, 136. The nodes 150, 152, 154, 156 form the remote address space 140. In Fig. 1, exemplarily four servers 130, 132, 134, 136 are shown, each containing four nodes. In this example, it is supposed that nodes of several servers are associated with a technical application. For example, the nodes 151, 153, and 157 (black boxes) that are accommodated in servers 130, 132, and 136, respectively, are supposed to be associated with a technical application 1, as for example a measurement comprising several sensors that are distributed to several servers 130, 132, 136. The servers 130, 132, 134, 136 each export a file, e.g. nodeset files 120, 122, 124, and 126, containing the node descriptions of all nodes, i.e., each of the four nodes 150 of server 130, each of the four nodes 152 of server 132, etc. The node description information generator 110 imports the node descriptions contained in the files 120, 122, 124, 126 via the generator input interface 114. The generator 110 is configured through configuration file 160 to generate a further file, e.g., the file 112 in Fig.1, which contains descriptions of only those nodes 151, 153, 157, that are associated with application 1.

A nodeset file comprises the node description of one server. Therefore, the generator may write several reduced nodeset files, i.e., one for each of the servers 130, 132, 134, 136, instead of one file 112. This option allows for configuring the aggregating server to select which of the servers 130, 132, 134, 136 are to be aggregated completely by OPC UA services as, for example, browse and read, and which of the servers 130, 132, 134, 136 are to be aggregated by the reduced nodeset files. Alternatively, as described above, file 112 may be a single file, that contains the reduced nodesets of all servers 130, 132, 134, 136.

The configuration can be performed by reading a configuration file 160 via the file interface 118, that reads and parses the configuration information and passes the information to the write routines in the generator processing module 116 of the node description information generator 110. Optionally, the generator 110 can be configured through a connection to the configuration server 117 which may be part of the generator 110. A client anywhere in the system may connect to the configuration server 117, as for example by a generator configuration client 174 in the client device 170. As a further possibility, the configuration file 160 could be sent over a wired or wireless file transfer technology to the memory location where the generator input interface 114 expects the file 160 to be located. The configuration can be changed during the normal operation of the system 190 by modifying the configuration file 160 or through the client-server connection.

The aggregation server 100 imports the node description information from the file 112 over the address space description interface 101 and provides it to the filter 102. The filter 102 filters the nodes 150, 152, 154, 156 in the remote address space to which it has access over the remote node input interface 103, so that the aggregation module 107 aggregates only nodes 151, 153, and 157 associated with application 1. The result of the filtering are the proxy nodes 104, 106, and 108. The proxy node data is displayed by the external client device 170, which comprises a console or an application software.

The external client 170, or alternatively another client or device may comprise a further client 174, which can connect to the configuration server 117 running on the hardware of the generator 110, e.g., to define which nodes of the nodes 150, 152, 154, 156 are to be associated with application 1. Alternatively, the configuration client 174 may write or modify the configuration file 160. In this case, the configuration file 160 may be located on the aggregation server 100 and be read by the generator 110 over a similar interface as the export / import interface for the file 112 containing the reduced node descriptions, or the reduced nodeset files 112, respectively.

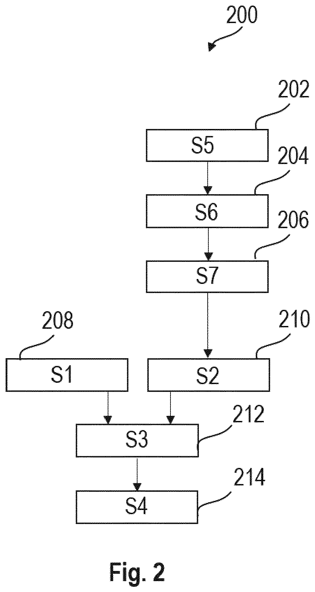

Fig. 2 shows a method 200 for filtering aggregation node images. Steps S5 to S7 describe the generation of the node description information of the reduced nodeset to be aggregated, whereas steps S1 to S4 describe the filtering process in the aggregation server 110 of Fig. 1, which imports the generated reduced nodeset information.

Starting with step S5, node description information of nodes in the remote address space 140 (see Fig. 1) is received 202 by the node description information generator 100. In step S6, aggregation description information is generated 204 by the node description information generator 110 based on the received node description information and on a node aggregation configuration; and in step S7, the generated node aggregation description information is output 206 by the node description information generator 110, and provided to the aggregation server 100.

In step S1, the node images representing nodes in a remote address space 140 is received by the aggregation server 208. In step S2, the node description information of nodes in the remote address space 140 to be aggregated is imported 210 by the aggregation server 100. In step S3, the received node images are filtered 212 by the aggregation server 100 according to the node description information; and in step S4, the filtered node images are aggregated 214 by the aggregation server 100.

The aggregating server, the node description information generator, and the system, respectively, as well as the method therefore allow for a reduced time to set-up or start the system, for saving processing resources, especially in the client device and the aggregation server, and for reducing power consumption in these devices. Further, by reducing the accessible information at the client device, the security is enhanced.

## Claims

1. Aggregating server (100), comprising:
a remote node input interface (103), configured to receive node images representing nodes (150, 152, 154, 156) in a remote address space (140), wherein the node images are structured node data of the nodes (150, 152, 154, 156) in a remote address space (140);
an address space description interface (101), configured to import node description information comprising node descriptions of nodes (151, 153, 155) in the remote address space (140) to be aggregated and to provide the node description information to a node filter, wherein the address space description interface (101) is a file interface;
the node filter (102) located between the remote node input interface (103) and an aggregation module (107), configured to filter the node images received from the remote node input interface (103) according to the imported node description information of nodes (151, 153, 155) in the remote address space (140) to be aggregated; wherein the node filter comprises filter information; wherein the filter information is the imported node description information related to a technical application for each of the nodes in the remote address space that are to be aggregated, and wherein the filter is configured to keep only those images, which are contained in the received node description information; and
the aggregation module (107), configured to instantiate proxy nodes (104, 106, 108), wherein the proxy nodes represent filtered node images of nodes in the remote address space (140); and wherein the proxy nodes are provided to an external client;
wherein the aggregating server (100) is an Open Platform Communications Unified Architecture - OPC UA- aggregation server.

2. Aggregating server (100) according to claim 1, wherein the address space description interface (101) is a file interface or a digital data connection interface.

3. Aggregating server (100) according to claim 1 or 2, wherein the node description information comprises selected node descriptions of nodes (151, 153, 157) in the remote address space (140) to be aggregated associated with a technical application.

4. Node description information generator (110), configured to generate node aggregation description information to be imported by an aggregating server (100) according to any of claims 1 to 3 for filtering node images to be aggregated, comprising:
a generator input interface (114), configured to import node description information of nodes in a remote address space and to provide the imported node description information to a generator processing module (116);
the generator processing module (116), configured to generate node aggregation description information using the imported node description information and a configuration;
wherein the generated node aggregation description information describes only nodes to be aggregated by the aggregation according to the configuration; and
a generator output interface (115), configured to export the generated node aggregation description information.

5. Node description information generator (110) according to claim 4, further comprising
a configuration interface (117, 118), wherein the configuration interface comprises a configuration server (117) and/or a file interface (118) for configuring the node description information generator (110).

6. System (190), comprising:
an aggregation server (100) according to one of claims 1 to 3; and
a node description information generator (110) according to claim 4 or 5.

7. System (190) according to claim 6, further comprising
a client device (170) comprising a first client (174) for accessing the aggregation server (100) and representing the filtered aggregated nodes (104, 106, 108).

8. System (190), according to claim 7, wherein the client device (170) further comprises a second client (174) for connecting to the configuration server (117) of the node description information generator (110).

9. Computer implemented method (200) for filtering aggregation node images, comprising the steps:
S1 receiving (208), by an aggregation server according to any of claims 1 to 3, node images representing nodes in a remote address space;
S2 importing (210), by the aggregation server, node description information of nodes in the remote address space to be aggregated, and to provide the node description information to a node filter, wherein the address space description interface (101) is a file interface;
S3 filtering (212), by the node filter, the received node images according to the node description information; wherein the filtering is performed according to filter information; wherein the filter information is node description information related to a technical application for each of the nodes that are to be aggregated that is imported by the aggregating server; wherein the filtering comprises keeping only those images, which are contained in the received node description information; and
S4 aggregating (214), by the aggregation server, filtered node images and instantiating proxy nodes (104, 106, 108), wherein the proxy nodes represent filtered node images of nodes in the remote address space (140); and wherein the proxy nodes are provided to an external client.

10. Method (200) according to claim 9, wherein the method (200) further comprises:
S5 receiving (202), by a node description information generator, node description information of nodes in a remote address space;
S6 generating (204), by the node description information generator, aggregation description information based on the received node description information and on a configuration, wherein the generated node aggregation description information describes only nodes to be aggregated by the aggregation according to the configuration; and
S7 exporting (206), by the node description information generator, the generated node aggregation description information and providing the generated node aggregation description information to the aggregation server (100).

11. Computer program element, which when being executed by a processor, instructs the aggregating server (100) according to any of claims 1 to 3 to perform steps S1 to S4 and steps S5 to S7 of claim 10.

12. Computer readable medium on which a program element according to claim 11 is stored.

## Patentansprüche

1. Aggregationsserver (100), umfassend:
• eine Remote-Knoteneingabeschnittstelle (103), die eingerichtet ist, Knotenbilder zu empfangen, die Knoten (150, 152, 154, 156) in einem entfernten Adressraum (140) darstellen, wobei die Knotenbilder strukturierte Knotendaten der Knoten (150, 152, 154, 156) in einem entfernten Adressraum (140) sind;
• eine Adressraumbeschreibungsschnittstelle (101), die eingerichtet ist, Knotenbeschreibungsinformationen zu importieren, die Knotenbeschreibungen von Knoten (151, 153, 155) in dem entfernten Adressraum (140) umfassen, die aggregiert werden sollen, und die Knotenbeschreibungsinformationen an einen Knotenfilter bereitzustellen, wobei die Adressraumbeschreibungsschnittstelle (101) eine Dateischnittstelle ist;
• den Knotenfilter (102), der sich zwischen der Remote-Knoteneingabeschnittstelle (103) und einem Aggregationsmodul (107) befindet, eingerichtet ist, die von der Remote-Knoteneingabeschnittstelle (103) empfangenen Knotenbilder gemäß den importierten Knotenbeschreibungsinformationen der zu aggregierenden Knoten (151, 153, 155) im entfernten Adressraum (140) zu filtern; wobei der Knotenfilter Filterinformationen umfasst; wobei die Filterinformationen die importierten Knotenbeschreibungsinformationen zu einer technischen Anwendung für jeden der Knoten im entfernten Adressraum umfassen, die aggregiert werden sollen, und wobei der Filter so eingerichtet ist, dass er nur diejenigen Bilder beibehält, die in den empfangenen Knotenbeschreibungsinformationen enthalten sind; und
• das Aggregationsmodul (107), das eingerichtet ist, Proxieknoten (104, 106, 108) zu instanziieren, wobei die Proxieknoten gefilterte Knotenbilder von Knoten im entfernten Adressraum (140) darstellen; und wobei die Proxieknoten einem externen Client bereitgestellt werden; wobei der Aggregationsserver (100) ein Open Platform Communications Unified Architecture (OPC UA) Aggregationsserver ist.

2. Aggregationsserver (100) nach Anspruch 1, wobei die Adressraumbeschreibungsschnittstelle (101) eine Dateischnittstelle oder eine digitale Datenverbindungsschnittstelle ist.

3. Aggregationsserver (100) nach Anspruch 1 oder 2, wobei die Knotenbeschreibungsinformationen ausgewählte Knotenbeschreibungen von Knoten (151, 153, 157) im entfernten Adressraum (140) umfassen, die mit einer technischen Anwendung verbunden sind.

4. Knotenbeschreibungs-Informationsgenerator (110), der eingerichtet ist, Knotaggregationsbeschreibungsinformationen zu erzeugen, die von einem Aggregationsserver (100) gemäß einem der Ansprüche 1 bis 3 zum Filtern von zu aggregierenden Knotenbildern importiert werden sollen, umfassend:
• eine Generator-Eingabeschnittstelle (114), die eingerichtet ist, Knotenbeschreibungsinformationen von Knoten in einem entfernten Adressraum zu importieren und die importierten Knotenbeschreibungsinformationen an ein Generatorverarbeitungsmodul (116) bereitzustellen;
• das Generatorverarbeitungsmodul (116), das eingerichtet ist, Knotaggregationsbeschreibungsinformationen unter Verwendung der importierten Knotenbeschreibungsinformationen und einer Konfiguration zu erzeugen; wobei die erzeugten Knotaggregationsbeschreibungsinformationen nur die Knoten beschreiben, die gemäß der Konfiguration durch die Aggregation aggregiert werden sollen; und
• eine Generator-Ausgabeschnittstelle (115), die eingerichtet ist, die erzeugten Knotaggregationsbeschreibungsinformationen zu exportieren.

5. Knotenbeschreibungs-Informationsgenerator (110) nach Anspruch 4, weiter umfassend:
• eine Konfigurationsschnittstelle (117, 118), wobei die Konfigurationsschnittstelle einen Konfigurationsserver (117) und/oder eine Dateischnittstelle (118) zur Konfiguration des Knotenbeschreibungs-Informationsgenerators (110) umfasst.

6. System (190), umfassend:
• einen Aggregationsserver (100) gemäß einem der Ansprüche 1 bis 3; und
• einen Knotenbeschreibungs-Informationsgenerator (110) gemäß Anspruch 4 oder 5.

7. System (190) gemäß Anspruch 6, weiter umfassend:
• ein Client-Gerät (170), das einen ersten Client (174) umfasst, um auf den Aggregationsserver (100) zuzugreifen und die gefilterten aggregierten Knoten (104, 106, 108) darzustellen.

8. System (190) gemäß Anspruch 7, wobei das Client-Gerät (170) weiter einen zweiten Client (174) umfasst, um eine Verbindung zum Konfigurationsserver (117) des Knotenbeschreibungs-Informationsgenerators (110) herzustellen.

9. Computergestütztes Verfahren (200) zum Filtern von Aggregationsknotenbildern, umfassend die Schritte:
• S1 Empfangen (208) von Knotenbildern, die Knoten in einem entfernten Adressraum darstellen, durch einen Aggregationsserver gemäß einem der Ansprüche 1 bis 3;
• S2 Importieren (210) von Knotenbeschreibungsinformationen der zu aggregierenden Knoten im entfernten Adressraum durch den Aggregationsserver und Bereitstellen der Knotenbeschreibungsinformationen an einen Knotenfilter, wobei die Adressraumbeschreibungsschnittstelle (101) eine Dateischnittstelle ist;
• S3 Filtern (212) der empfangenen Knotenbilder durch den Knotenfilter gemäß den Knotenbeschreibungsinformationen; wobei das Filtern gemäß den Filterinformationen erfolgt; wobei die Filterinformationen Knotenbeschreibungsinformationen sind, die sich auf eine technische Anwendung für jeden der zu aggregierenden Knoten beziehen und die vom Aggregationsserver importiert werden; wobei das Filtern das Beibehalten nur derjenigen Bilder umfasst, die in den empfangenen Knotenbeschreibungsinformationen enthalten sind; und
• S4 Aggregieren (214) der gefilterten Knotenbilder durch den Aggregationsserver und Instanziieren von Proxieknoten (104, 106, 108), wobei die Proxieknoten gefilterte Knotenbilder von Knoten im entfernten Adressraum (140) darstellen; und wobei die Proxieknoten einem externen Client bereitgestellt werden.

10. Verfahren (200) nach Anspruch 9, wobei das Verfahren (200) weiter die folgenden Schritte umfasst:
• S5 Empfangen (202) von Knotenbeschreibungsinformationen von Knoten in einem entfernten Adressraum durch einen Knotenbeschreibungs-Informationsgenerator;
• S6 Erzeugen (204) von Aggregationsbeschreibungsinformationen durch den Knotenbeschreibungs-Informationsgenerator basierend auf den empfangenen Knotenbeschreibungsinformationen und einer Konfiguration, wobei die erzeugten Knotaggregationsbeschreibungsinformationen nur die Knoten beschreiben, die gemäß der Konfiguration durch die Aggregation aggregiert werden sollen; und
• S7 Exportieren (206) der erzeugten Knotaggregationsbeschreibungsinformationen durch den Knotenbeschreibungs-Informationsgenerator und Bereitstellen der erzeugten Knotaggregationsbeschreibungsinformationen an den Aggregationsserver (100).

11. Computerprogrammelement, das, wenn es von einem Prozessor ausgeführt wird, den Aggregationsserver (100) gemäß einem der Ansprüche 1 bis 3 anweist, die Schritte S1 bis S4 und die Schritte S5 bis S7 von Anspruch 10 auszuführen.

12. Computerlesbares Medium, auf dem ein Programmelement gemäß Anspruch 11 gespeichert ist.

## Revendications

1. Serveur d'agrégation (100), comprenant :
une interface d'entrée de noeuds distants (103), configurée pour recevoir des images de noeuds représentant des noeuds (150, 152, 154, 156) dans un espace d'adressage distant (140), les images de noeuds étant des données structurées de noeuds des noeuds (150, 152, 154, 156) dans un espace d'adressage distant (140) ;
une interface de description d'espace d'adressage (101), configurée pour importer des informations de description de noeuds comprenant des descriptions de noeuds de noeuds (151, 153, 155) dans l'espace d'adressage distant (140) à agréger et pour fournir les informations de description de noeuds à un filtre de noeuds, l'interface de description d'espace d'adressage (101) étant une interface de fichier ;
le filtre de noeuds (102), situé entre l'interface d'entrée de noeuds distants (103) et un module d'agrégation (107) et configuré pour filtrer les images de noeuds reçues en provenance de l'interface d'entrée de noeuds distants (103) selon les informations de description de noeuds importées des noeuds (151, 153, 155) dans l'espace d'adressage distant (140) à agréger ; le filtre de noeuds comprenant des informations de filtre ;
les informations de filtre étant les informations de description de noeuds importées relatives à une application technique pour chacun des noeuds dans l'espace d'adressage distant à agréger, et le filtre étant configuré pour ne conserver que les images contenues dans les informations de description de noeuds reçues ; et
le module d'agrégation (107), configuré pour instancier des noeuds mandataires (104, 106, 108), les noeuds mandataires représentant des images de noeuds filtrées de noeuds dans l'espace d'adressage distant (140) ; et les noeuds mandataires étant situés sur un client externe ;
le serveur d'agrégation (100) étant un serveur d'agrégation à architecture unifiée de communication en plateforme ouverte (Open Platform Communications Unified Architecture, OPC UA).

2. Serveur d'agrégation (100) selon la revendication 1, dans lequel l'interface de description d'espace d'adressage (101) est une interface de fichier ou une interface de connexion de données numériques.

3. Serveur d'agrégation (100) selon la revendication 1 ou 2, dans lequel les informations de description de noeuds comprennent des descriptions sélectionnées de noeuds de noeuds (151, 153, 157) dans l'espace d'adressage distant (140) à agréger, associées à une application technique.

4. Générateur d'informations de description de noeuds (110), configuré pour générer des informations de description d'agrégation de noeuds à importer par un serveur d'agrégation (100) selon l'une quelconque des revendications 1 à 3 pour filtrer des images de noeuds à agréger, comprenant :
une interface d'entrée de générateur (114), configurée pour importer des informations de description de noeuds de noeuds dans un espace d'adressage distant et pour fournir les informations de description de noeuds importées à un module de traitement de générateur (116) ;
le module de traitement de générateur (116), configuré pour générer des informations de description d'agrégation de noeuds au moyen des informations de description de noeuds importées et d'une configuration ;
les informations de description d'agrégation de noeuds générées décrivant uniquement les noeuds à agréger par l'agrégation selon la configuration ; et
une interface de sortie de générateur (115), configurée pour exporter les informations de description d'agrégation de noeuds générées.

5. Générateur d'informations de description de noeuds (110) selon la revendication 4, comprenant en outre :
une interface de configuration (117, 118), l'interface de configuration comprenant un serveur de configuration (117) et/ou une interface de fichier (118) pour configurer le générateur d'informations de description de noeuds (110).

6. Système (190), comprenant :
un serveur d'agrégation (100) selon l'une quelconque des revendications 1 à 3 ; et
un générateur d'informations de description de noeuds (110) selon la revendication 4 ou 5.

7. Système (190) selon la revendication 6, comprenant en outre :
un dispositif client (170) comprenant un premier client (174) pour accéder au serveur d'agrégation (100) et représenter les noeuds (104, 106, 108) agrégés filtrés.

8. Système (190) selon la revendication 7, dans lequel le dispositif client (170) comprend en outre un second client (174) pour se connecter au serveur de configuration (117) du générateur d'informations de description de noeuds (110).

9. Procédé mis en œuvre par ordinateur (200) pour filtrer des images de noeuds d'agrégation, comprenant les étapes consistant à :
S1 recevoir (208), par un serveur d'agrégation selon l'une quelconque des revendications 1 à 3, des images de noeuds représentant des noeuds dans un espace d'adressage distant ;
S2 importer (210), par le serveur d'agrégation, des informations de description de noeuds de noeuds dans l'espace d'adressage distant à agréger, et fournir les informations de description de noeuds à un filtre de noeuds, l'interface de description d'espace d'adressage (101) étant une interface de fichier ;
S3 filtrer (212), par le filtre de noeuds, les images de noeuds reçues selon les informations de description de noeuds ; le filtrage étant réalisé selon des informations de filtre ; les informations de filtre étant des informations de description de noeuds relatives à une application technique pour chacun des noeuds à agréger, qui sont importées par le serveur d'agrégation, le filtrage consistant à ne conserver que les images contenues dans les informations de description de noeuds reçues ; et
S4 agréger (214), par le serveur d'agrégation, des images de noeuds filtrées et instancier des noeuds mandataires (104, 106, 108), les noeuds mandataires représentant des images de noeuds filtrées de noeuds dans l'espace d'adressage distant (140) ; et les noeuds mandataires étant situés sur un client externe ;

10. Procédé (200) selon la revendication 9, le procédé (200) comprenant en outre les étapes consistant à :
S5 recevoir (202), par un générateur d'informations de description de noeuds, des informations de description de noeuds de noeuds dans un espace d'adressage distant ;
S6 générer (204), par le générateur d'informations de description de noeuds, des informations de description d'agrégation sur la base des informations de description de noeuds reçues et d'une configuration, les informations de description d'agrégation de noeuds générées décrivant uniquement les noeuds à agréger par l'agrégation selon la configuration ; et
S7 exporter (206), par le générateur d'informations de description de noeuds, les informations de description d'agrégation de noeuds générées et fournir les informations de description d'agrégation de noeuds générées au serveur d'agrégation (100).

11. Élément de programme informatique qui, lorsqu'il est exécuté par un processeur, donne l'instruction au serveur d'agrégation (100) selon l'une quelconque des revendications 1 à 3 de réaliser les étapes S1 à S4 et les étapes S5 à S7 selon la revendication 10.

12. Support lisible par ordinateur, sur lequel un élément de programme selon la revendication 11 est stocké.
